# EUROPEAN PATENT APPLICATION

(11) **EP 4 836 218 A1**
(43) Date of publication of application: **04.11.2026**
(21) Application number: 25173150.1
(22) Date of filing: 29.04.2025
(51) Int. Cl.: H02J 1/10, H02J 1/14

(54) **A METHOD FOR MANAGING ENERGY FLOW IN AN INDUSTRIAL SYSTEM**

(71) Applicant: Murrelektronik GmbH, 71570 Oppenweiler (DE)
(72) Inventor: Hiltunen, Jani, 05400 Jokela (FI); Häsä, Timo, 01940 Palojoki (FI); Siltala, Juuso, 15340 Lahti (FI)
(74) Representative: Bösherz Goebel Patentanwälte

(57) **Abstract**

The invention relates to a method (300) for managing energy flow in an industrial system (10), the industrial system (10) comprising at least one actuator (200) that has at least two operational states including an energy consuming state and an energy regenerative state, at least one of which or each of which contributes to an operating process for operating the industrial system.

## Description

The present invention relates to a method for managing energy flow in an industrial system. Furthermore, the present invention relates to a power management system and an industrial system.

### State of the art

Electrical motors are an integral component of modern industrial applications, including assembly lines and logistics centers.

Beyond their primary function as actuators in industrial processes, DC electric motors can also operate as generators when braking, converting kinetic or potential energy back into electrical energy. This regenerative energy must be properly managed; otherwise, the voltage at the DC link can rise to levels that potentially damage electronic components.

A brake chopper is a standard solution to mitigate overvoltage problems originating from regenerative energy. The brake chopper simply dissipates excess energy as heat through a resistor, thereby limiting voltage rise at the DC link. However, this method is inefficient and creates thermal management challenges, particularly in enclosed spaces.

This efficiency problem can be addressed through energy recuperation systems. One approach, as described in prior art document EP4354697A1, uses an inverter front end to feed regenerative energy back to the distribution grid.

Another approach, as detailed in the prior art, implements retrofit modules with bidirectional DC/DC converters and energy storage arrangements that capture regenerative energy during braking operations and return it to the system, avoiding the need to release energy as heat.

### Disclosure of the invention

The subject matter of the invention is a method with the features of claim 1, a power management system with the features of claim 11, and an industrial system with the features of claim 15. Further features and details of the invention are apparent from the respective dependent claims, the description, and the drawings. Features and details described in connection with the method according to the invention naturally also apply in connection with the power management system according to the invention and the industrial system according to the invention, and vice versa, so that mutual reference is always possible with regard to the disclosure of the invention.

According to one aspect of the invention, a method for managing energy flow in an industrial system may be provided. The industrial system may comprise at least one actuator, particularly multiple actuators. The industrial system, particularly the industrial system according to the invention, may be configured as an assembly line and/or an automation system and/or a logistics center.

An operating process of the industrial system may therefore include a sequence of coordinated operations performed by the actuators, wherein particularly each actuator executes defined movements or tasks based on control signals, operational schedules, and system states. The process may further involve the monitoring of energy consumption by the actuators, and/or the dynamic adjustment of actuator activities to optimize energy usage, and/or the redistribution of available energy resources within the system to maintain operational efficiency and/or minimize downtime and/or prevent system overloads.

The at least one actuator (i.e. the single actuator or each of the multiple actuators) has at least two operational states including an energy consuming state and an energy regenerative state. At least one of these states or each of these states may contribute to an/the operating process for operating the industrial system. In other words, beyond their primary function as actuator, the at least one actuator and particularly DC electric motor can also operate as generator when braking, converting kinetic or potential energy back into electrical energy. The energy consuming state may contribute to the operating process by executing mechanical movements and/or applying forces and/or performing positioning tasks in accordance with predefined control commands. Such actions may be synchronized with the overall operational sequence of the industrial system and may be adapted based on real-time energy management parameters to enhance system efficiency and responsiveness. The energy regenerative state may contribute to the operating process by feeding electrical energy back into the power grid and/or storing it within an energy storage arrangement, such as a battery or capacitor bank. This recovered energy can then be utilized to offset the energy consumed during subsequent operation in the energy consuming state, thereby reducing the overall energy demand of the industrial system.

The transition between the energy consuming and energy regenerative states may be managed by a control system that may also use a power management system, particularly according to the invention, optimizing the energy exchange based on factors including system demand, grid conditions, and energy storage levels.

The method according to the invention may also comprise connecting at least one energy source and/or the at least one actuator and/or an energy storage arrangement (with each other), particularly using at least one energy conversion unit. This allows to enable bi- or multi-directional energy flow between the at least one energy source and/or the at least one actuator and/or the energy storage arrangement.

For example, the at least one (or only one) energy source may comprise a power grid, for example an AC or DC power grid. The at least one energy conversion unit may comprise multiple energy conversion units like one or multiple AC/DC and/or one or multiple DC/DC and/or one or multiple DC/AC converters. The at least one actuator may comprise groups of actuators, each group may be connected to the energy source through at least one of the energy conversion units, thereby forming a DC link between the energy source and the actuators.

In other words, multiple energy conversion units may be provided that are assigned to different actuators or groups of actuators and/or configured to convert energy from the at least one energy source to the assigned actuator/group of actuators, thereby forming different energy conversion groups. Usually, these different energy conversion units and/or different energy conversion groups work independently from each other. However, according to the invention, a communication link may be provided between the energy conversion units and/or the different energy conversion groups. This allows for a communication and/or coordination of the conversion of different energy conversion units / energy conversion groups.

The method according to the invention may therefore comprise a provision of state information specific to the operational state of the at least one actuator and/or a provision of process information indicating an expected continuation of the operating process, such as a duration until the next planned activation of the at least one actuator or another information that is specific for the duration and/or time of activation. This information can facilitate predictive control strategies, allowing the system to anticipate energy demands and optimize the transition between consuming and regenerative states. For example, knowledge of an impending deceleration allows for proactive engagement of the regenerative braking functionality, maximizing energy recovery. Furthermore, the provision of process information can enable the system to prioritize energy regeneration during periods of low demand or high grid stability, while minimizing regenerative braking or prioritizing the saving of energy in the energy storage arrangement when energy storage is full, or grid conditions are unfavorable. This dynamic adaptation enhances overall system efficiency and minimizes energy waste.

Energy recovery from the energy storage arrangement and particularly from the DC link to the actuators can also be prioritized if it is detected, using the provided process information, that higher energy consumption is to be expected in the industrial system. It may be possible to recover energy selectively at different points, i.e. for different actuators, in the industrial system.

The following steps may therefore also be provided according to the invention:
- Determining the charge status of the energy storage arrangement,
- Detecting an expected energy requirement in the industrial system, particularly based on the process information provided,
- Locating at least one of the actuators of the industrial system (or at least one group of the different groups of actuators) that has the detected energy requirement or the highest energy requirement,
- Feeding back the energy stored in the energy storage arrangement to the at least one located actuator (or group of actuators) depending on the determined charge status and the detected energy requirement.

If more than one actuator (or actuator group) has an expected energy requirement, the fedback energy can also be distributed according to each requirement if necessary.

The method according to the invention may also comprise controlling an energy flow direction of the energy flow through the at least one energy conversion unit based on the state information and/or based on the process information. In other words, based on the expected energy requirements in the industrial system, the energy may preferably be divided and/or directed to different actuators and/or groups of actuators. This may for example be done by controlling the different energy conversion units, so that the energy storage arrangement is connected to each of the actuators with an expected energy requirement.

It is therefore possible that the method according to the invention enables a dynamic adjustment of energy pathways within the industrial system, reacting to the actuator's operating state and predicted process demands. The inclusion of state information regarding the actuator's mode-either consuming or regenerating energy-allows the control system to anticipate energy availability and demand. Process information, representing the anticipated trajectory of the operating process, facilitates proactive energy management, mitigating energy waste and optimizing storage utilization.

The or each of the energy conversion unit(s), acting as a flexible conduit, may facilitate bidirectional or multi-directional power transfer, allowing for seamless integration with the power grid or energy storage. This avoids the fixed energy dissipation of conventional brake choppers and instead allows for a fluid reallocation of power.

The ability to coordinate multiple actuator systems (actuator groups) enhances overall efficiency by minimizing unnecessary energy conversions and optimizing the contribution of each individual actuator and particularly motor. The responsiveness of the system may be improved through real-time correlation between the status of the actuators and the process information, enabling finely tuned control of the energy flow.

It is possible that the industrial system is configured as an industrial automation system, particularly an intralogistics transport system. With the industrial system and particularly intralogistics transport system, goods, components, or materials may be autonomously conveyed, sorted, and/or distributed within a facility by means of actuators such as conveyor belts, automated guided vehicles, robotic arms, and/or sorting mechanisms, all of which may operate under a centralized or decentralized control architecture and are subject to dynamic energy flow management to optimize operational throughput and energy efficiency.

The at least one actuator may comprise multiple actuators, each configured as an electrical motor and particularly DC motor.

The at least one energy source may comprise an AC or DC energy source and particularly a connection to an AC or DC supply network, preferably (power) grid. It is therefore also possible that (only) one energy source is provided for the industrial system and therefore for multiple actuators.

The energy storage arrangement may be part of a DC link, particularly comprising energy storage units like a rechargeable battery and/or a DC link capacitor. This enables it to store energy for a future use by the at least one actuator. It is also possible that the energy storage arrangement may comprise more than one energy storage unit located in different DC links and/or assigned to different actuators or groups of actuators. However, using an intelligent control of the energy conversion units, the energy stored in each one of the energy storage units may be flexibly distributed to the different actuators of the system.

The at least one energy conversion unit may comprise multiple energy conversion units, each particularly configured as bidirectional power converter, particularly including DC/DC and/or DC/AC and/or AC/DC converters. Each may be configured for connecting at least one of the actuators with the DC link and/or with the energy storage arrangement and/or with the at least one (or single) energy source.

The controlling may be carried out to control, by setting the energy flow direction through the energy conversion units and based on the state information and/or the process information, at least one or all of the following:
- energy conversion from the at least one actuator to the at least one energy source, particularly to the grid, and/or
- energy conversion from the at least one actuator to the energy storage arrangement, particularly for buffering the energy to feed it back into the grid at a later point in time, and/or
- energy conversion from the at least one actuator to the energy storage arrangement for buffering the energy to make it available at a later point in time for consumption by the at least one actuator, particularly in case the process information indicates an expected energy demand of the at least one actuator according to the operating process, and preferably based on the available capacity of the energy storage arrangement to store this energy.

It is possible that the industrial system incorporates numerous actuators and particularly electrical motors that contribute to the operational flow. The system's energy source may be directly linked to an external alternating current (AC) or direct current (DC) power distribution network (grid). The energy storage arrangement may be integrated within a DC link, potentially incorporating energy storage units like rechargeable batteries and/or DC link capacitors for energy buffering. The control system dynamically adjusts the direction of energy flow through the energy conversion units, responding to the operational state of the motors and the anticipated needs of the ongoing operating process. This includes directing regenerative energy from the actuators either back to the external power grid, or into the energy storage arrangement for subsequent use by the actuators.

It is possible that the energy conversion units, particularly those connected to different of the actuators and/or motor drive systems and/or integrated into different automation platforms, and at least one control unit are connected via at least one communication link.

This may allow a) to provide the process information, in particular by exchanging information about an operating status of the energy conversion units and/or a state of charge of the energy storage arrangement, particularly of different energy storage units, preferably of those integrated into different automation platforms, via the communication link.

This may additionally or alternatively allow b) to initiate energy conversion to different actuators via the communication link depending on a detection of an expected demand of these actuators.

In other words, the communication link allows for the transmission of operational status data, including the state of energy conversion units and the charge level of energy storage elements, potentially distributed across different automation platforms. This connectivity enables at least one control unit, particularly a central control unit or multiple decentral control units, to proactively manage energy flows by initiating conversions to different actuators based on predicted demand, enhancing the system's responsiveness and efficiency.

It is possible that the energy storage units and the energy conversion units are integrated into different automation platforms to be decentrally connected to different ones of the actuators. One or more of the actuators may be connected to each of the automation platforms, thereby enabling decentralized automation of an industrial system. In other words, each of the automation platforms may be connected to at least one different actuator and particularly a different group of actuators, thereby providing the energy conversion for the different actuators of the industrial system and forming energy conversion groups.

The automation platforms may be connected to the same energy source and the communication link that is particularly used to exchange control information for the decentral automation, particularly to determine the process information and/or the expected continuation of the operating process.

It is therefore possible that the energy storage arrangement / the energy storage units and/or energy conversion units are distributed across distinct automation platforms, facilitating decentralized connectivity to multiple actuators. This architecture allows for the automation of the industrial system without centralized control or reducing the need for a centralized control. Each automation platform may manage a subset of actuators, potentially sharing a common energy source. A communication link between these platforms enables the exchange of control information, primarily for determining process information and predicting the progression of the operational process. This decentralized arrangement promotes operational flexibility, allows for independent scaling of automation modules, and may reduce single points of failure within the industrial system. The modular design simplifies maintenance and potentially allows for selective upgrades to specific automation platforms without disrupting the entire industrial process.

It is possible that the controlling is carried out and, in particular, the process information is determined using the exchanged control information. The control information may at least partly comprise information about the expected continuation of the operating process. It is therefore possible that the control strategy incorporates anticipated progression of the operational procedure, deriving this data from exchanged control signals. The incorporated control signals and particularly control data may contain information regarding the predicted continuation of the operational process, which may inform the adaptive energy flow management. This allows the energy conversion unit(s) to proactively adjust energy flow direction, optimizing utilization of the energy storage arrangement and enhancing the overall efficiency of the industrial system.

The process information and particularly the expected continuation of the operating process may at least partially be provided by reading out and/or evaluating a specification, particularly a plan, of the process or the process control of the industrial system. This may be a predefined program, e.g. a PLC program or the like. It can also include a manual definition of the planned sequences and/or a historical record of a recurring process that is executed by the industrial system. Especially in the case of multiple decentralized automation platforms of a single industrial system, the communication link may be used to exchange this specification of the processes that are planned to be carried out by the different platforms, particularly by their control units. This makes it possible to return energy from the energy storage arrangement to at least one of the actuators via at least one of the automation platforms even if, as planned, another of the automation platforms will perform the control that leads to the expected energy consumption. It is thereby also possible to enable energy flow between different automation platforms in order to supply various actuators of the industrial system.

It is possible that the controlling is carried out and, in particular, the process information is determined using at least one adaptive and self-learning model, particularly to predict the expected continuation of the operating process, preferably to predict energy consumption patterns within the industrial system and dynamically adjust the optimal utilization strategy based on said predicted consumption patterns and/or to determine an optimal utilization strategy for energy stored in the energy storage units. The predictive capability of the system may therefore at least partly rely on or is improved by machine learning algorithms that analyze historical data pertaining to actuator operation, process demands, and energy consumption. This allows for the generation of dynamic profiles that anticipate future energy requirements, facilitating proactive adjustments to energy storage utilization. The adaptive model may also learn from real-time system behavior, refining its predictions over time and/or improving the efficiency of energy flow. This dynamic adaptation allows for optimized energy usage, minimizing reliance on external power sources and/or maximizing the use of regenerative energy.

It is possible that at least one or all of the actuators are configured as, particularly low-power, brushless direct current motors. The brushless direct current motors may be operated at low power levels. This enables efficient energy regeneration during deceleration or load reduction, directly contributing to the system's capability to recover energy otherwise lost as heat. The incorporation of BLDC motors allows for precise control over regenerative braking, influencing the energy flow direction managed by the energy conversion unit. Their compact size and reduced maintenance requirements further optimize the overall system design, facilitating integration into existing industrial infrastructure.

It is possible that the process information is obtained based on a bidirectional communication between different modules and/or different motor drive systems and/or different automation platforms via at least one communication link. The controlling may be carried out based on an evaluation of the process information to coordinate the energy flow between energy conversion units of the different modules and/or different motor drive systems and/or different automation platforms.

It is possible that the different modules and/or different motor drive systems and/or different automation platforms are at least partially connected via a fieldbus, preferably configured or as part of the communication link. Thereby, the individual modules, motor drive systems, and/or automation platforms may be interconnected through a fieldbus system to enable communication and coordination. This fieldbus integration facilitates the exchange of data and control signals between the different components of the industrial system.

It is possible the evaluation determines the expected continuation of the operating process by determining at least one or all of the following:
- An expected start of at least one of the actuators,
- An identifier of the at least one of the actuators to be started,
- An expected, estimated energy consumption of at least one of the actuators,
- A planned sequence of events and/or a sequence of activations of at least one of the actuators.

This enables anticipation of future actuator activity, such as predicting when an actuator will begin operation. The anticipated commencement of an actuator's operation facilitates proactive energy management, allowing for optimized energy flow and storage utilization. Identifying which actuators are slated to start allows for targeted allocation of regenerative energy and minimization of unnecessary energy conversions. Estimating the future energy consumption of actuators allows for preemptive adjustments to energy storage levels and grid feedback strategies. A planned sequence of actuator events or activations provides a comprehensive roadmap for energy management, allowing for refined control of energy flow and maximizing efficiency within the industrial system.

According to another aspect of the invention, a power management system, i.e. a system at least for power management, for an industrial system may be provided. The industrial system may comprise at least one (or multiple) actuator that has at least two operational states including an energy consuming state and an energy regenerative state, at least one of which or each of which contributes to an operating process, particularly transport and/or production process, for operating the industrial system. The industrial system may comprise an industrial plant and/or a mechanical and/or pneumatic and/or electrical system.

The system may also comprise a converter arrangement for connecting at least one energy source, an energy storage arrangement, and the at least one actuator. The converter arrangement may have at least one energy conversion unit to enable energy flow between the at least one energy source, the at least one actuator, and the energy storage arrangement.

The system may also comprise a control unit configured to control an energy flow direction of the energy flow through the at least one energy conversion unit based on the operational state of the at least one actuator.

It is possible that the control unit is further configured to control the energy flow direction based on an expected continuation of the operating process.

The power management system according to the invention thus offers the same advantages as those described in detail with reference to a method according to the invention. Also, the power management system according to the invention may be operated according to a method according to the invention.

It is possible that the power management system anticipates subsequent operational states of the actuator to proactively adjust energy flow, minimizing losses and maximizing efficiency. The system's ability to foresee the progression of the industrial process allows for predictive energy routing, potentially pre-charging storage or preparing the grid for energy return. This anticipatory control extends beyond reactive adjustments based on the actuator's current state, ensuring a smoother and more optimized power flow. The design avoids unnecessary energy conversions by aligning the energy flow with anticipated needs. This predictive capability is particularly valuable in environments with rapidly changing operational demands and numerous actuators. The control unit's logic may incorporate assessments of the industrial system's trajectory. This proactive measure contributes to a more stable and responsive power management system.

It is possible that a communication link is provided to carry out bidirectional communication and coordination between at least two of the energy conversion units associated with at least two of the actuators in the industrial system to manage energy flow and avoid unnecessary energy conversion. This communication allows for managing power distribution and minimizing superfluous energy transformations.

It is possible that the industrial system is configured as an intralogistics transport system, the intralogistics transport system particularly comprising a conveyor belt driven by the at least one actuator.

It is possible that the system is configured as an automation platform for a decentralized automation of the industrial system. This configuration promotes modularity and scalability, rather than relying on a central controller. The automation platform architecture allows for independent energy flow optimization of individual actuator groups or zones within the industrial system, leading to improved responsiveness and resilience.

The communication between the automation platforms through the communication link allows for a coordinated power management and/or coordinated energy flow between the different automation platforms.

A further aspect of the invention comprises an industrial System. The industrial system may comprise:
- At least two of the power management systems according to the invention for supplying and managing energy to and controlling the actuators of the industrial system in order to jointly operate the industrial system (according to an operation process) and provide its functionality.
- A communication link for providing an exchange of process information between the power management systems in order to determine the expected continuation of the operating process for the energy management.

It is possible that the industrial system incorporates multiple, interconnected motor drive systems. Each may be capable of independently supplying energy and regulating actuators within the overall industrial environment. These systems may communicate through a designated link, enabling the transmission of process data to anticipate subsequent operational requirements and optimize energy management strategies.

It is also possible that the at least one actuator is supplied by the at least one energy source, the control unit being configured to decide based on an input signal whether the at least one actuator is consuming electrical energy from the at least one energy source or generating electrical energy, and the input signal particularly being a voltage measured in an electrical connection line between the at least one energy source and the at least one actuator, the input signal particularly being an electrical current measured in an electrical connection line between the at least one energy source and the at least one actuator, the at least one energy source preferably supplying the actuator with a source voltage in the range of 10 V up to 120 V.

It is also possible that the power management system is designed as a retrofit module for an existing industrial system. Alternatively, or additionally, the system may comprise an input terminal and an output terminal, wherein the input terminal is provided for connection with the energy source and the output terminal is provided for connection with the actuator.

Also, he at least one actuator may comprise at least one electric motor, particularly at least one DC electric motor and/or at least one BLDC motor. Alternatively, or additionally, the at least one actuator may comprise two or more actuators, each configured as an electric motor, in particular a BLDC motor. The at least one energy conversion unit may comprise a bidirectional DC/DC converter, and/or the energy storage arrangement may be selected from the group consisting of: a capacitor, a high voltage capacitor, a super capacitor, and a rechargeable battery, or an arrangement of at least one of these.

The method and/or power management system according to the invention may also provide a mechanism to feed energy back to the energy source and particularly the grid. When energy storage is made available by the energy storage arrangement it is not mandatory to feed energy back to the grid immediately, but the buffering capability of energy storage makes it possible to choose the most optimal time and market price when to feed energy back to the grid. This type of intelligent optimization is proposed to be used in industrial applications particularly with low-power BLDC motors. For example, it may be used for an intralogistics center where heavy packages are transferred up and down. Traditionally in this application, a normal 24V/48V power supply with a diode bridge input stage would be used to power the motor. This kind of use of a standard power supply leads to reliability problems due to regenerative overvoltage or requires a lossy brake chopper. According to embodiments of the invention, however, when several motor drive systems are connected together, the units can communicate together and use adaptive and self-learning models to avoid unnecessary energy conversion back and forth with the grid. Energy conversion back to the grid may make sense only when it is known that no energy consumption will occur shortly and voltage in the DC link is getting to dangerously high levels. When there is the capacity to store energy in the battery or DC link capacitor and it is known that energy will be consumed on the load side soon, it can be better to use the regenerative energy to charge up the DC link.

The solution according to the invention may particularly be useful in complicated systems with numerous motors, inverters, and DC/DC converters. In such systems, global optimization of power flow can create significant savings in energy.

In another aspect of the invention a computer program may be provided, in particular a computer program product, comprising instructions which, when the computer program is executed by at least one computer, cause the computer to carry out the method according to the invention. Thus, the computer program according to the invention can have the same advantages as has been described in detail with reference to a method according to the invention.

The computer may be a data processing device or any other computer system which executes the computer program. The computer may include at least one processor that can be used to execute the computer program. Also, a non-volatile data memory may be provided in which the computer program may be stored and from which the computer program may be read by the processor for being carried out.

Another object of the invention is a data processing apparatus comprising means for carrying out the steps of the method according to the invention. The data processing apparatus according to the invention thus has the same advantages as those described in detail with reference to a method according to the invention.

The data processing apparatus according to the invention and preferably the computer can be designed to execute the computer program according to the invention. For this purpose, the data processing apparatus according to the invention can have at least one processor. A non-volatile data memory can also be provided, in which the computer program is stored and from which the computer program can be read out by the processor for execution.

The data processing apparatus according to the invention can also be provided in whole or in part in a cloud and/or as a server in order to make the data processing available for a local application via the interface. Accordingly, the data processing apparatus according to the invention can also be designed as a computer system such as a distributed system and preferably a server-client system. It is also possible for the data processing apparatus according to the invention to be designed as a mobile device, such as a smartphone.

According to another aspect of the invention, a computer-readable storage medium may be provided which comprises the computer program according to the invention. The storage medium may be formed as a data storage device such as a hard disk and/or a non-volatile memory and/or a memory card and/or a solid-state drive. The storage medium may, for example, be integrated into the computer.

Furthermore, the method according to the invention may be implemented as a computer-implemented method. Alternatively, or additionally, all, each and/or at least one of the disclosed method steps may be computer-implemented and/or automated.

Further advantages, features, and details of the invention are apparent from the following description, in which embodiments of the invention are described in detail with reference to the drawings. The features mentioned in the claims and in the description may be essential to the invention individually or in any combination. The drawings show:
Fig. 1 a schematic illustration of embodiments of the invention.
Fig. 2 another schematic illustration of a method according to embodiments of the invention.

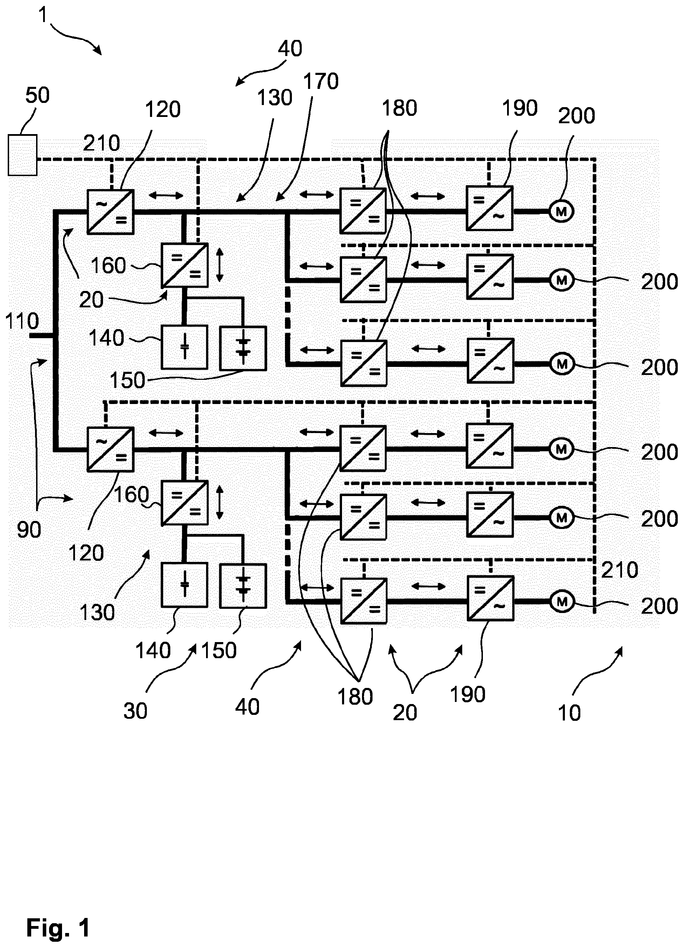

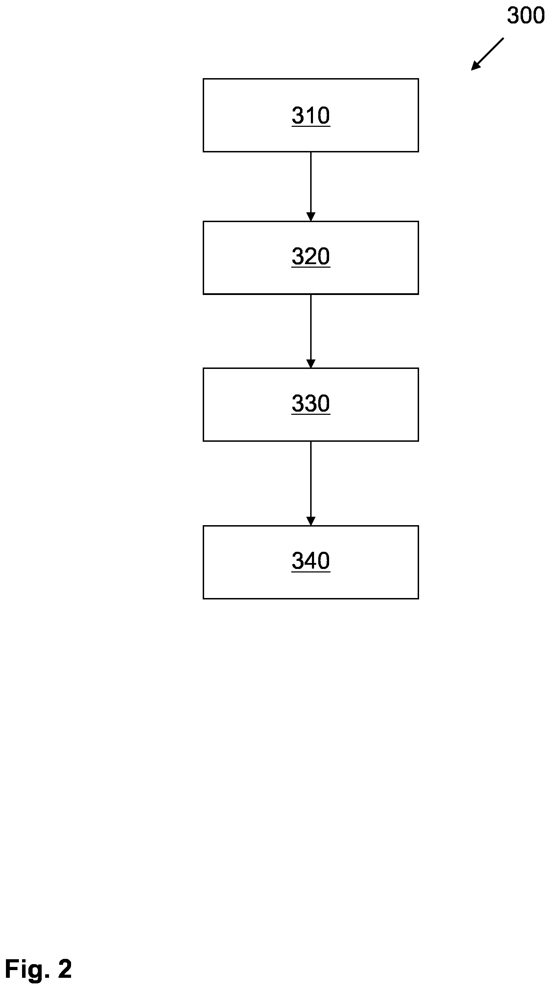

Fig. 1 schematically shows a system 1 and Fig. 2 illustrates a method 300 according to embodiments of the invention, each (at least) for managing energy flow in an industrial system 10.

As shown in Fig. 1, the industrial system 10 may comprise at least one actuator 200. In the example shown, six actuators are provided which are assigned to two groups of two automation platforms 90. The at least one actuator 200, or each of the multiple actuators 200, has at least two operational states including an energy consuming state and an energy regenerative state. At least one of these or each of these states may contribute to an operating process for operating the industrial system 10. For example, in case the actuators 200 are configured as motors, this means that in the energy consuming state, electrical energy is consumed to generate mechanical motion for driving a load, whereas in the energy regenerative state, mechanical motion of the load is converted into electrical energy, which may be fed back into an energy storage arrangement or into an electrical grid. The transition between the energy consuming state and the energy regenerative state may be controlled based on operational requirements of the industrial system 10 and may occur automatically or in response to control signals generated by at least one system controller (not shown).

According to Fig. 2, a first method step 310 may comprise connecting at least one energy source 110, the at least one actuator 200, and an energy storage arrangement 30, using at least one energy conversion unit 20 of a converter arrangement 40 for the connection. This enables bi- or multi-directional energy flow between the at least one energy source 110, the at least one actuator 200, and the energy storage arrangement 30. An energy conversion unit 20 like a DC/DC converter can provide a bi-directional energy flow, i.e. a conversion of electrical energy from a first voltage level to a second voltage level and vice versa. In bidirectional operation, a single energy conversion unit 20 can transfer energy from a source, like the DC link 130 and/or the energy storage arrangement 30 and/or the energy source 110, to a load (like the at least one actuator 200) as well as recover energy from the load back to the source. The direction of energy flow can be dynamically controlled based on system requirements. Similarly, a multi-directional energy flow may be achieved by a network of more than one energy conversion unit 20, for example to control an energy flow (two-way) between at least three of the following nodes: an energy source 110, like the power grid 110, an energy storage arrangement 30, the DC link 130, at least one actuator 200.

Another important aspect of the embodiments of the invention is the ability of different elements of the system 1 to communicate with each other. According to a second method step 320, state information may therefore be provided that is specific for the operational state of the at least one actuator 200. According to a third method step 330, process information may be provided that indicates an expected continuation of the operating process. In other words, the process information may be specific for an expected trajectory of the upcoming operational states for the system 1.

According to a fourth method step 340, an energy flow direction of the energy flow may be controlled through the at least one energy conversion unit 20 based on the state information and/or based on the process information. It is thereby possible that the method enables a dynamic adjustment of energy pathways within the industrial system, reacting to the actuator's operating state and predicted process demands.

As shown in Fig. 1, at least two groups can be configured as segments of the industrial system 10 that are controlled and/or supplied by different modules or automation platforms 90. Each of the modules or automation platforms 90 can therefore comprise a connection to an energy source 110, to one or more energy storage arrangements 30 and to one or more energy conversion units 20. The different elements 20, 30 - as well as other elements such as at least one system controller or at least one field bus controller - may be arranged in functional modules that can be connected to the automation platforms 90 in a modular fashion.

Furthermore, according to Fig. 1, the at least one actuator 200 may comprise multiple actuators 200 that are configured as electrical motors 200. Also, the at least one energy source 110 may comprise an AC or DC energy source and particularly a connection to an AC or DC supply network, preferably grid. The energy storage arrangement 30 may be part of a DC link 130, particularly comprising a rechargeable battery 150 and/or a DC link capacitor 140. The at least one energy conversion unit 20 may comprise multiple energy conversion units 20, each configured as bidirectional power converter, particularly including DC/DC and/or DC/AC and/or AC/DC converters, and each for connecting at least one of the actuators 200 with the DC link 130, with the energy storage arrangement 30, and with the at least one energy source 110.

The controlling 340 may be carried out to control, by setting the energy flow direction through the energy conversion units 20 and based on the state information and/or the process information, at least one of the following:
- energy conversion from the at least one actuator 200 to the at least one energy source 110, particularly to the grid, and/or
- energy conversion from the at least one actuator 200 to the energy storage arrangement 30, particularly for buffering the energy to feed it back into the grid at a later point in time, and/or
- energy conversion from the at least one actuator 200 to the energy storage arrangement 30 for buffering the energy to make it available at a later point in time for consumption by the at least one actuator, particularly in case the process information indicates an expected energy demand of the at least one actuator 200 according to the operating process, and preferably based on the available capacity of the energy storage arrangement 30 to store this energy.

Additionally, the energy conversion units 20, particularly those connected to different of the actuators 200 and/or motor drive systems and/or integrated into different automation platforms 90, and at least one control unit 50 are connected via at least one communication link 210 to provide the process information, in particular by exchanging information about an operating status of the energy conversion units 20 and/or a state of charge of the energy storage arrangement 30, particularly of different energy storage units 140,150, preferably of those integrated into different automation platforms 90, via the communication link 210.

Fig. 1 shows a schematic circuit diagram of a power management system 1 according to embodiments of the invention. At least one control unit 50 is shown to control an energy flow direction of the energy flow through the at least one energy conversion unit 20 based on the operational state of the at least one actuator 200. The control unit 50 may optionally be part of a system control that controls the operation of the industrial system 1 like the activation of the actuators 200. It is possible that the at least one control unit 50 is a single, central control unit 50 or comprises more than one control unit 50 arranged in different automation platforms 60.

The energy source 110 may be connected to the at least one actuator 200 via an electrical connection line. The energy source 110 may be a DC voltage source supplying the actuator 200 with a source voltage in the range of 10 V up to 120 V, in particular from 10 V up to 80 V, more particularly from 24 V up to 72 V. In a preferred embodiment, the source voltage is 48 V.

The power management system 1 may comprise at least one energy conversion unit 20 that is electrically connected to the at least one actuator 200. The or each of the energy conversion unit(s) 20 can be implemented in various configurations depending on the specific requirements of the application. In one embodiment, the or at least one of the energy conversion unit(s) 20 is a bidirectional DC/DC converter. The bidirectional DC/DC converter may be implemented as a half-bridge converter, a full-bridge converter, a buck-boost converter, a Cuk converter, or a flyback converter with bidirectional capability.

The or at least one of the energy conversion unit(s) 20 may include power semiconductor devices such as MOSFETs, IGBTs, or other switching devices that enable controlled energy flow in both directions. These switching devices are controlled by appropriate gate drivers which may receive control signals from the control unit 50. The respective energy conversion unit 20 may also include passive components such as inductors and capacitors that facilitate efficient energy transfer and filtering of electrical noise.

In a particular embodiment, the or at least one of the energy conversion unit(s) 20 is configured as a synchronous buck-boost converter, which allows for both step-up and stepdown voltage conversion while maintaining high efficiency across a wide range of operating conditions. This configuration is particularly advantageous when the voltage of the energy storage arrangement 30 may vary significantly during operation.

The at least one energy storage arrangement 30 may be connected to the or to at least one of the energy conversion unit(s) 20. The energy storage arrangement 30 may serve for storing the energy released when the actuator 200 is in a regenerative state. By storing this energy rather than dissipating it as heat, the system reduces thermal management requirements and improves overall energy efficiency.

The energy storage arrangement 30 may be implemented in various forms, including at least one capacitor, at least one high voltage capacitor, at least one super capacitor (also known as an ultracapacitor), or at least one rechargeable battery. In the case of a high voltage capacitor, energy can be stored with voltages up to several hundred volts, in particular up to approximately 1 kV. When the energy storage arrangement is a rechargeable battery, it may be permanently installed or designed to be exchangeable. The battery may be a lithium-ion battery, a lithium-polymer battery, a nickel-metal hydride battery, or another suitable type of rechargeable battery.

In some embodiments, the energy storage arrangement 30 may comprise a combination of different storage technologies, such as batteries and super capacitors in a hybrid configuration. This approach leverages the high-power density of super capacitors for handling rapid energy transfers during regenerative events and the high energy density of batteries for longer-term energy storage.

The power management system 1 may further comprise at least one control unit 50 for controlling the at least one energy conversion unit 20. The control unit 50 may be designed to control energy flow direction through the at least one energy conversion unit 20 based on the operational state of the at least one actuator 200. Specifically, the control unit 50 allows charging of the energy storage arrangement 30 via the at least one energy conversion unit 20 when the actuator is in a regenerative state and generating electrical energy. Conversely, the control unit 50 may allow energy supply to the electrical system from the energy storage arrangement 30 via the energy conversion unit when the at least one actuator 200 is in an energy consuming state.

The control unit 50 may be configured to receive at least one input signal, which it uses to determine the operational state of the respective actuator 200. In one embodiment, the input signal is a voltage measured in the electrical connection line between the energy source 110 and the actuator 200. The control unit 50 may determine that the actuator 200 is in a regenerative state if the measured voltage exceeds a predetermined voltage threshold value. Alternatively, or additionally, the control unit 50 determines that the actuator is in an energy consuming state if the measured voltage falls below the predetermined voltage threshold value.

In another embodiment, the input signal may be an electrical current measured in the electrical connection line between the energy source 110 and the respective actuator 200. The control unit 50 may determine that the actuator 200 is in a regenerative state if the current measured in the electrical connection line flows in the direction from the actuator 200 to the energy source 110. The control unit 50 determines that the actuator 200 is in an energy consuming state if the current measured in the electrical connection line flows in the direction from the energy source 110 to the actuator 200. In a particular implementation, the control unit 50 may use a current threshold value, such as zero, to make this determination.

The control unit 50 may comprise a microcontroller, a digital signal processor (DSP), a fieldprogrammable gate array (FPGA), or another suitable processing device, along with associated memory and input/output interfaces. The control unit 50 may be configured as a data processing apparatus according to the invention.

The power management system can also be designed as a retrofit module for at least one existing industrial system 1. The retrofit module may be formed separately from an electrical system into which it can be retrofitted. This allows for easy integration into existing systems without requiring significant modifications to the original equipment. In a retrofit configuration, the power management system may comprise at least one input terminal and at least one output terminal. The input terminal may be provided for connection with the energy source 110, and the output terminal may be provided for connection with the at least one actuator 200.

The at least one actuator 200 can be any device that converts electrical energy into mechanical energy and vice versa. In a preferred embodiment, the or at least one of the actuator(s) 200 is an electric motor, particularly a DC electric motor. The respective actuator 200 may also be an AC motor with appropriate power electronics for DC interfacing, a linear actuator, or another electromechanical device capable of regenerative operation.

The power management system 1 may further comprise at least one communication interface for transmitting at least one operational data via the communication link 210. The communication interface may be implemented as a bus system such as IO-Link, Ethernet, or a classic fieldbus like ProfNet, EtherNet/IP, or EtherCat. Through this communication interface, various operational parameters such as energy stored in the energy storage arrangement, current flow, voltage levels, operational readiness status of the system, or operational readiness status of the energy storage arrangement can be transmitted.

During operation, when an object being moved by the actuator (e.g., on a conveyor belt) needs to be decelerated, the kinetic or potential energy may be converted by the at least one actuator 200 into electrical energy. Without the power management system 1, this energy would typically be dissipated as heat through a resistor. With the power management system 1, according to embodiments of the invention, the control unit detects that the at least one actuator 200 is in a regenerative state and configures the energy conversion unit to direct this energy to the energy storage arrangement 30.

Later, when the at least one actuator 200 needs to accelerate an object or perform other work, the control unit 50 may detect that the actuator is or is expected to be, i.e. is now or will soon be, in an energy consuming state and configures the at least one energy conversion unit 20 to supply energy from the energy storage arrangement 30 to supplement or replace energy from the energy source 110. This is particularly beneficial during periods of high energy demand, such as during startup of the actuator.

According to embodiments of the invention and as shown in Fig. 1, the energy source 110 supplies an alternating current (AC) input, which is converted into a direct current (DC) voltage by the AC/DC converter 120. The output of the AC/DC converter 120 is connected to the DC bus 130, which serves as the central distribution point for the DC voltage.

Connected in parallel with the DC bus 130 are two energy storage elements, namely a capacitor 140 and a battery 150, which are configured to stabilize the DC voltage and to provide or absorb energy as required.

A main bidirectional DC/DC converter 160 is connected to the DC bus 130 and is configured to adapt the voltage level for downstream components. The output of the main bidirectional DC/DC converter 160 is connected to a modular DC distribution bus 170.

Each module 90, particularly automation platform 90, may comprise one energy storage arrangement 30, a connection to the energy source 110, and one modular DC distribution bus 170.

Each actuator 200 is assigned a supply module. Each supply module shown in Fig. 1 includes a local bidirectional DC/DC converter 180 and is connected to the modular DC distribution bus 170. The bidirectional DC/DC converter 180 regulates the voltage supplied to (optional) associated DC/AC converters 190.

Each DC/AC converter 190 may be provided, if necessary, to convert the regulated DC voltage into an AC voltage suitable for driving an electric motor 200. Each electric motor 200 is connected to its respective DC/AC converter 190 and is thereby powered by the modular system.

Each module 90 and/or supply module (starting with 180) may operate independently and may also allow bidirectional energy transfer between the actuators/motors 200 and the DC bus 130 through the associated converters 180, 190, enabling both motoring and regenerative braking modes.

The power management system 1 may perform the step of receiving 320 state information specific for the operational state of the at least one actuator 200. To this end, the system 1 may monitor electrical parameters within the connection line between the power source and the actuator 200, such as measuring voltage levels where a voltage exceeding a predetermined threshold indicates regenerative operation, or by measuring current direction where current flowing from the actuator toward the power source signifies energy generation.

Alternatively, or additionally, the system may receive direct signals from motor drivers or controllers that contain integrated detection capabilities for operational states.

The or at least one of the actuators 200 may be configured as a low-power brushless direct current (BLDC) motor. This motor may comprise a stator equipped with multiple windings and a rotor carrying permanent magnets. The motor may be configured to operate with an electrical power input of less than approximately 100 watts, and in some embodiments even less than 50 watts. The electronic commutation of the motor is achieved via an external controller that sequentially energizes the stator windings based on the rotor position, which may be detected using Hall effect sensors, back-EMF sensing, or sensorless techniques.

The preceding description of the embodiments describes the present invention exclusively in the context of examples. Of course, individual features of the embodiments may be freely combined with one another, provided that this is technically meaningful, without departing from the scope of the present invention.

### Reference list

- 1: System
- 10: Industrial system
- 20: Energy conversion unit
- 30: Energy storage device
- 40: Converter arrangement
- 50: Control unit
- 90: automation platform
- 110: Energy source, AC input, grid
- 120: AC/DC converter
- 130: DC bus, central DC link
- 140: Capacitor, energy storage element
- 150: Battery, energy storage element
- 160: Main bidirectional DC/DC converter
- 170: Modular DC distribution bus
- 180: Local bidirectional DC/DC converter (module)
- 190: DC/AC converter (inverter)
- 200: Actuator, Electric motor
- 210: Communication link
- 300: Method
- 310: First method step
- 320: Second method step
- 330: Third method
- 340: Fourth method

## Claims

1. A method (300) for managing energy flow in an industrial system (10), the industrial system (10) comprising at least one actuator (200) that has at least two operational states including an energy consuming state and an energy regenerative state, at least one of which or each of which contributes to an operating process for operating the industrial system (10),
the method comprising:
- connecting (310) at least one energy source (110), the at least one actuator (200), and an energy storage arrangement (30), using at least one energy conversion unit (20), thereby enabling bi- or multi-directional energy flow between the at least one energy source (110), the at least one actuator (200), and the energy storage arrangement (30),
- providing (320) state information specific to the operational state of the at least one actuator (200),
- providing (330) process information indicating an expected continuation of the operating process,
- controlling (340) an energy flow direction of the energy flow through the at least one energy conversion unit (20) based on the state information and based on the process information.

2. The method (300) of claim 1, **characterized in that** the industrial system (10) is configured as an industrial automation system (10), particularly an intralogistics transport system (10), and
the at least one actuator (200) comprising multiple actuators (200), each configured as an electrical motor (200), and
the at least one energy source (110) comprising an AC or DC energy source and particularly a connection to an AC or DC supply network, preferably grid, and the energy storage arrangement (30) being part of a DC link (130), particularly comprising a rechargeable battery (150) and/or a DC link capacitor (140), and
the at least one energy conversion unit (20) comprises multiple energy conversion units (20), each configured as bidirectional power converter, particularly including DC/DC and/or DC/AC and/or AC/DC converters, and each for connecting at least one of the actuators (200) with the DC link (130), with the energy storage arrangement (30), and with the at least one energy source (110), and
the controlling (340) being carried out to control, by setting the energy flow direction through the energy conversion units (20) and based on the state information and/or the process information,
- energy conversion from the at least one actuator (200) to the at least one energy source (110), particularly to the grid, and
- energy conversion from the at least one actuator (200) to the energy storage arrangement (30), particularly for buffering the energy to feed it back into the grid at a later point in time, and
- energy conversion from the at least one actuator (200) to the energy storage arrangement (30) for buffering the energy to make it available at a later point in time for consumption by the at least one actuator, particularly in case the process information indicates an expected energy demand of the at least one actuator (200) according to the operating process, and preferably based on the available capacity of the energy storage arrangement (30) to store this energy.

3. The method (300) of claim 2, **characterized in that** the energy conversion units (20), particularly those connected to different of the actuators (200) and/or motor drive systems and/or integrated into different automation platforms (90), and at least one control unit (50) are connected via at least one communication link (210)
a) to provide the process information, in particular by exchanging information about an operating status of the energy conversion units (20) and/or a state of charge of the energy storage arrangement (30), particularly of different energy storage units (140,150), preferably of those integrated into different automation platforms (90), via the communication link (210), and
b) to initiate energy conversion to different actuators via the communication link (210) depending on a detection of an expected demand of these actuators.

4. The method (300) of claim 3, **characterized in that** the energy storage units (140,150) and the energy conversion units (20) being integrated into different automation platforms (90) to be decentrally connected to different ones of the actuators (200), one or more of the actuators (200) being connected to each of the automation platforms (90), thereby enabling decentralized automation of industrial system (10), and the automation platforms (90) preferably being connected to the same energy source (110) and the communication link (210) particularly being used to exchange control information for the decentral automation, particularly to determine the process information and the expected continuation of the operating process.

5. The method (300) of claim 4, **characterized in that** the controlling (340) is carried out and, in particular, the process information is determined using the exchanged control information, the control information at least partly comprising information about the expected continuation of the operating process.

6. The method (300) of claim 4 or 5, **characterized in that** the controlling (340) is carried out and, in particular, the process information is determined using at least one adaptive and self-learning model, particularly to predict the expected continuation of the operating process, preferably to predict energy consumption patterns within the industrial system (10) and dynamically adjust the optimal utilization strategy based on said predicted consumption patterns and/or to determine an optimal utilization strategy for energy stored in the energy storage units (140,150).

7. The method (300) of any one of the preceding claims, **characterized in that** at least one or all of the actuators (200) are configured as, particularly low-power, brushless direct current (BLDC) motors.

8. The method (300) of any one of the preceding claims, **characterized in that** the process information is obtained based on a bidirectional communication between different modules (90) and/or different motor drive systems (90) and/or different automation platforms (90) via at least one communication link (210), the controlling (304) being carried out based on an evaluation of the process information to coordinate the energy flow between energy conversion units (20) of the different modules (90) and/or different motor drive systems (90) and/or different automation platforms (90).

9. The method (300) of claim 8, **characterized in that** the different modules (90) and/or different motor drive systems (90) and/or different automation platforms (90) are at least partially connected via a fieldbus, preferably configured or as part of the communication link (210).

10. The method (300) of claims 8 or 9, **characterized in that** the evaluation determines the expected continuation of the operating process by determining at least one of the following:
- An expected start of at least one of the actuators,
- An identifier of the at least one of the actuators to be started,
- An expected, estimated energy consumption of at least one of the actuators,
- A planned sequence of events and/or a sequence of activations of at least one of the actuators.

11. A system (1) at least for power management for an industrial system (10), the industrial system (10) comprising at least one actuator (200) that has at least two operational states including an energy consuming state and an energy regenerative state, at least one of which or each of which contributes to an operating process for operating the industrial system (10),
the system (1) comprising:
- a converter arrangement (40) for connecting at least one energy source (110), an energy storage arrangement (30), and the at least one actuator (200), the converter arrangement (40) having at least one energy conversion unit (20) to enable energy flow between the at least one energy source (110), the at least one actuator (200), and the energy storage arrangement (30),
- a control unit (50) configured to control an energy flow direction of the energy flow through the at least one energy conversion unit (20) based on the operational state of the at least one actuator (200),
**characterized in that** the control unit (50) is further configured to control the energy flow direction based on an expected continuation of the operating process.

12. The system (1) of claim 11,
**characterized in that** a communication link (210) is provided to carry out bidirectional communication and coordination between at least two of the energy conversion units (20) associated with at least two of the actuators (200) in the industrial system (10) to manage energy flow and avoid unnecessary energy conversion.

13. The system (1) of any one of claims 11 or 12, **characterized in that** the industrial system is configured as an intralogistics transport system, the intralogistics transport system particularly comprising a conveyor belt driven by the at least one actuator (200).

14. The system (1) of any one of claims 11 or 13, **characterized in that** the system (1) is configured as an automation platform (90) for a decentralized automation of the industrial system (10), and/or that the system (1) is configured to be operated according to a method (300) of any one of claims 1 to 10.

15. Industrial System (10), comprising:
- At least two of the systems (1) of claim 14 for supplying and managing energy to and controlling the actuators (200) of the industrial system (10) in order to jointly operate the industrial system (10) and provide its functionality,
- A communication link (210) for providing an exchange of process information between the systems (1) in order to determine the expected continuation of the operating process for the energy management.
